# EUROPÄISCHE PATENTANMELDUNG

(11) **EP 4 183 713 A1**
(43) Veröffentlichungstag der Anmeldung: **24.05.2023**
(21) Anmeldenummer: 22208519.3
(22) Anmeldetag: 21.11.2022
(51) Int. Cl.: B65G 1/02

(54) **REGALBODEN AUS BETON**

(30) Priorität: 22.11.2021 DE 102021130472
(71) Anmelder: OTTO QUAST Fertigbau Lindenberg GmbH & Co. KG, 57258 Freudenberg (DE)
(72) Erfinder: Schimanski, Andreas, 59227 Ahle (DE); Waffenschmidt, Thomas, 57258 Freudenberg (DE); Quast, Sebastian, 57074 Siegen (DE)
(74) Vertreter: Bals & Vogel Patentanwälte PartGmbB

(57) **Zusammenfassung**

Die Erfindung betrifft einen Regalboden (1) zur Verwendung mit einem Regallagersystem (100), wobei der Regalboden (1) aus Beton hergestellt ist.

Die Erfindung betrifft ebenfalls ein Regallagersystem (100) sowie ein Verfahren (200) zur Herstellung eines Regalbodens (1).

## Beschreibung

Die Erfindung betrifft einen Regalboden zur Verwendung mit einem Regallagersystem mit den Merkmalen des Oberbegriffs des unabhängigen Hauptanspruchs sowie ein Regallagersystem mit den Merkmalen des Oberbegriffs des nebengeordneten Systemanspruchs und ein Verfahren zur Herstellung eines erfindungsgemäßen Regalbodens mit den Merkmalen des nebengeordneten Verfahrensanspruchs.

Die zentralisierte Lagerung und Bereitstellung von Waren sind sowohl im Hinblick auf den Warenvertrieb über Online-Portale als auch in Bezug auf fertigende Industriebetriebe von großer Bedeutung. In Großraumlagern und Logistikzentren werden in diesem Zusammenhang komplexe Regallagersysteme verwendet, die eine effiziente Ein- und Auslagerung verschiedenster Waren ermöglichen.

Es ist aus dem Stand der Technik bekannt, dass bei den in Rede stehenden Regallagersystemen (holzbasierte) Spanplatten als Regalböden eingesetzt werden, wobei diese als Belag für Lagerflächen und/oder Laufflächen des Regallagersystems eingesetzt werden. Der Begriff Regalboden wird nachfolgend synonym sowohl für Lagerflächen als auch für Laufflächen bei Regallagersystemen (es ist nicht der Standboden vom Regallagersystem gemeint) verwendet. Mit Lagerflächen sind hierbei Flächen innerhalb des Regallagersystems gemeint, die zur Lagerung von Waren verwendet werden. Mit anderen Worten werden die einzulagernden Waren direkt oder auf geeigneten Unterkonstruktionen wie Holzpaletten auf den Lagerflächen positioniert bzw. abgestellt. Mit Laufflächen sind hingegen Flure und/oder Fluchtwege innerhalb des Regallagersystems (oberhalb des Standbodens vom Regallagersystem) gemeint, auf denen sich Menschen und/oder Maschinen (wie bspw. Hubwägen) bewegen können, um bspw. Zugang zu spezifischen Lagerplätzen bzw. den darauf positionierten Waren zu erlangen.

Das Basismaterial zur Herstellung von Spanplatten sind Holzspäne, welche unter zusätzlicher Verwendung eines Bindemittels zu entsprechenden Platten verpresst werden. Die Platten können hierbei mehrschichtig aufgebaut sein, wobei die Größe der verwendeten Späne innerhalb der Schichten variieren kann. Die Größe und/oder Dicke der Spanplatten kann individuell an die geforderte Traglast bzw. die räumlichen Dimensionen eines Regallagersystems angepasst werden. Bei der Verwendung von Spanplatten als Regalböden in Regallagersystemen haben sich jedoch verschiedene Materialeigenschaften der Spanplatten als nachteilhaft erwiesen.

Durch die Verwendung von Holz als Basiswerkstoff der Spanplatten sind diese entflammbar bzw. brennbar. Da das Ständerwerk bzw. Gerüst, auf dem die Regalböden und/oder Laufplatten eines Regallagersystems aufgelegt werden, üblicherweise aus Metall oder anderen nicht oder nur schwer entflammbaren bzw. brennbaren Materialien besteht, wird bei bekannten Regallagersystemen somit allein durch die Verwendung von Spanplatten Regalböden eine erhebliche Brandlast in das Gebäude eingetragen, in welchem sich das Regallagersystem befindet. Diese Brandlast muss im Rahmen einer Gebäudeversicherung entsprechend berücksichtigt werden, was sich wiederum negativ auf den durch den Versicherungsnehmer zu entrichtendem Versicherungsbeitrag auswirkt, da dieser durch den Versicherungsgeber entsprechend höher angesetzt wird. Darüber hinaus birgt insbesondere die flächendeckende Verwendung von Spanplatten als Regalböden das Risiko einer schnellen und insbesondere großflächigen Flammenausbreitung im Brandfall. Entsprechend groß sind im Falle eines Brandes die zu erwartenden Schäden am Regal, den darin beinhalteten Waren sowie an dem Gebäude in dem sich das Regallagersystem befindet.

Kommt es im Brandfall außerdem zum Einsatz einer automatischen Feuerlöschanlage bzw. Sprinkleranlage, so wird ein weiterer Nachteil der Verwendung von Spanplatten als Regalböden bzw. Laufplatten innerhalb eines Regallagersystems ersichtlich. Da herkömmliche Spanplatten üblicherweise keine wasserabweisende Beschichtung bzw. aufgrund eines passgenauen Zuschnitts gesägte Ränder aufweisen, sind sie empfindlich gegenüber dem Eintrag von Wasser bzw. Feuchtigkeit. Das durch eine Sprinkleranlage im Falle eines Brandes großflächig in das Regallagersystem eingetragene Wasser würde ein zumindest teilweises Aufquellen der im Regallagersystem befindlichen Spanplatten bedingen, wodurch diese (auch bei nachfolgender Trocknung) aufgrund der hierdurch eingebüßten Tragfähigkeit und/oder Geometrieänderung für die weitere Verwendung unbrauchbar werden. Entsprechend zieht der Einsatz einer solchen Feuerlöschanlage unweigerlich einen großflächigen Austausch der innerhalb des Regalsystems verbauten Regalböden nach sich, was wiederum mit zeitlichem Aufwand, Verdienstausfällen und somit entsprechend hohen Kosten für den Lagerbetreiber verbunden ist. Auch sind Spanplatten aufgrund ihrer beschriebenen Empfindlichkeit gegenüber Wasser bzw. Feuchte ungeeignet für die Verwendung in Regallagersystemen, welche sich im Außenbereich bzw. nicht in geschlossenen Räumlichkeiten befinden und somit dem Einfluss der Witterung ausgesetzt sind.

Es ist daher Aufgabe der vorliegenden Erfindung zumindest einen der voranstehend beschriebenen Nachteile wenigstens teilweise zu überwinden. Insbesondere ist es Aufgabe der Erfindung, die Sicherheit bei Regallagersystemen, insbesondere in Gebäuden grundsätzlich zu verbessern. Des Weiteren ist es eine optionale Aufgabe der Erfindung, die Brandlast von Regallagersystemen sowie deren Empfindlichkeit gegenüber dem Eintrag von Wasser bzw. Feuchtigkeit zu verringern und gleichzeitig eine hohe Traglast sowie einfache Herstellung und Handhabung der innerhalb des Regallagersystems verwendeten Regalböden und/oder Laufplatten sicherzustellen.

Die voranstehende Aufgabe wird gelöst durch einen Regalboden mit den Merkmalen des Hauptanspruchs, ein Regallagersystem mit den Merkmalen des unabhängigen Systemanspruchs sowie ein Verfahren mit den Merkmalen des unabhängigen Verfahrensanspruchs. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Regalboden beschrieben sind, selbstverständlich auch im Zusammenhang mit dem erfindungsgemäßen Regallagersystem und/oder Verfahren zur Herstellung eines Regalbodens und jeweils umgekehrt, so dass bezüglich der Offenbarung zu den einzelnen Erfindungsaspekten stets wechselseitig Bezug genommen wird bzw. werden kann.

Erfindungsgemäß ist ein Regalboden vorgesehen, welcher (teilweise oder ganz / ausschließlich) aus Beton hergestellt ist. Die Verwendung von Beton als Werkstoff für den Regalboden bietet hierbei den Vorteil, dass der Regalboden weder entflammbar noch empfindlich gegenüber Wasser bzw. Feuchtigkeit ist. Bei Verwendung eines erfindungsgemäßen Regalbodens als Lauffläche und/oder Lagerfläche innerhalb eines Regallagersystems wird somit durch die Regalböden selber keine Brandlast in das Gebäude eingetragen, in welchem sich das Regallagersystem befindet. Sollte es dennoch zu einem Brand kommen, so wird die Ausbreitungsgeschwindigkeit der Flammen durch die Verwendung von Beton als Werkstoff für die Regalböden gehemmt. Kommt es im Brandfall weiterhin zum Einsatz einer automatischen Feuerlöschanlage bzw. Sprinkleranlage, so entsteht durch den Eintrag von Löschwasser bzw. Feuchtigkeit in das Regalsystem kein Schaden an den Regalböden, da diese weder in ihrer Geometrie noch in ihren mechanischen Eigenschaften nachteilig durch den Eintrag von Wasser bzw. Feuchtigkeit beeinflusst werden. Entsprechend ist es nicht erforderlich alle Regalböden im Wirkungsbereich der automatischen Feuerlöschanlage auszutauschen, nachdem diese aktiviert wurde. Dies reduziert den Arbeitsaufwand sowie die Kosten gegenüber einem im Brandfall ansonsten erforderlichen, flächendeckenden Austausch der Regalböden im Regallagersystem erheblich und ist im Sinne der Umweltfreundlichkeit nachhaltig. Die Verwendung von Beton als Werkstoff bietet weiterhin den Vorteil, dass dieser günstig und leicht zu verarbeiten ist sowie eine hohe mechanische Belastbarkeit bzw. Tragfähigkeit aufweist.

Bevorzugt enthält der zur Herstellung eines erfindungsgemäßen Regalbodens verwendete Beton ein Bindemittel sowie eine Gesteinskörnung als Zuschlagstoff. Insbesondere handelt es sich bei dem Bindemittel um ein hydraulisches Bindemittel, bevorzugt um Zement, besonders bevorzugt um Portlandzement.

Vorteilhaft kann weiterhin vorgesehen sein, dass zur Herstellung eines erfindungsgemäßen Regalbodens ein sehr weicher, bevorzugt fließfähiger, besonders bevorzugt selbstverdichtender Beton verwendet wird. In Bezug auf die für Betonwerkstoffe gültigen Konsistenzklassen ist es somit denkbar, dass ein Beton der Konsistenzklasse F4 (sehr weicher Beton), insbesondere ein Beton der Konsistenzklasse F5 (fließfähiger Beton), bevorzugt ein Beton der Konsistenzklasse F6 (sehr fließfähiger Beton) oder besonders bevorzugt ein Beton der Konsistenzklasse SVB (selbstverdichtender Beton) verwendet wird. Hierdurch ergibt sich der Vorteil, dass der Verdichtungsaufwand im Rahmen des Herstellungsprozesses gering gehalten wird und durch eine entsprechend hohe Fließfähigkeit auch filigrane Geometriestrukturen möglichst fehlerfrei abgebildet werden können, was sich positiv auf die Belastbarkeit und Zuverlässigkeit der Regalböden auswirkt.

Es kann im Rahmen der Erfindung vorgesehen sein, dass zur Herstellung eines erfindungsgemäßen Regalbodens ein hochfester Beton verwendet wird. In Bezug auf die für Normal- und Schwerbeton gültigen Druckfestigkeitsklassen ist es somit denkbar, dass ein Beton der Druckfestigkeitsklasse C55/67 oder höher eingesetzt wird. Insbesondere ist es denkbar, dass ein Beton der Druckfestigkeitsklasse C90/105 oder C100/115 verwendet wird. Bevorzugt liegt die charakteristische Festigkeit (Druckfestigkeit) des zur Herstellung des Regalbodens verwendeten Betons zwischen 75 N/mm² und 150 N/mm², insbesondere zwischen 90 N/mm² und 120 N/mm², besonders bevorzugt zwischen 95 N/mm² und 105 N/mm². Auch die Verwendung eines ultrahochfesten Betons mit einer Druckfestigkeit größer als 150 N/mm² ist im Rahmen der Erfindung denkbar.

Bezogen auf eine Draufsicht auf einen erfindungsgemäßen Regalboden, weist dieser bevorzugt eine rechteckige oder im Wesentlichen rechteckige Form auf. Entsprechend weist der Regalboden in dieser Perspektive eine Erstreckung in Längsrichtung auf, welche nachfolgend als Länge bezeichnet wird. Weiterhin weist der Regalboden eine Erstreckung in Querrichtung auf, welche nachfolgend als Breite bezeichnet wird. Querrichtung und Längsrichtung sind orthogonal zueinander ausgerichtet. In Bezug auf eine rechteckige oder im Wesentlichen rechteckige Form des Regalbodens bezieht sich die Angabe der Breite stets auf die kürzere Kantenlänge des Rechtecks, wohingegen sich die Angabe der Länge stets auf die längere Kantenlänge des Rechtecks bezieht. Auch kann der Regalboden einen quadratischen Querschnitt aufweisen, wobei Länge und Breite identisch sind und eine Unterscheidung somit obsolet ist. Zusätzlich weist der Regalboden eine Erstreckung in Tiefenrichtung auf, welche nachfolgend als Tiefe oder Materialstärke bezeichnet wird. Die Tiefenrichtung ist sowohl orthogonal zur Längsrichtung als auch orthogonal zur Querrichtung ausgerichtet. Auch Dreieckige, fünfeckige oder weitere vieleckige Querschnittsformen sowie kreisrunde oder ovale Querschnittsformen des Regalbodens sind prinzipiell durch den Gedanken der Erfindung umfasst, wobei es sich bei dieser Aufzählung nicht um eine abgeschlossene Liste handelt.

Insbesondere kann es im Rahmen der Erfindung vorgesehen sein, dass die Oberseite eines erfindungsgemäßen Regalbodens und/oder die Unterseite eines erfindungsgemäßen Regalbodens als ebene Fläche ausgestaltet ist. Für einen rechteckigen bzw. im Wesentlichen rechteckigen oder quadratischen bzw. im Wesentlichen quadratischen Regalboden, bei dem sowohl die Oberseite als auch die Unterseite als ebene Fläche ausgestaltet ist, ergibt sich somit aufgrund seiner Erstreckung in Tiefenrichtung die Form eines Quaders. Aus dieser Formgestaltung des Regalbodens ergibt sich der Vorteil einer besonders einfachen und günstigen Fertigung des Regalbodens, aufgrund der simplen geometrischen Gestaltung. Die Tragfähigkeit des Regalbodens kann weiterhin durch die Wahl der Materialstärke angepasst werden, wobei eine höhere Materialstärke bzw. Tiefe des Regalbodens zu einer höheren Tragfähigkeit führt. Der Regalboden wird im Rahmen dieser Gestaltung somit durch eine einzige quaderförmige Platte gebildet, welche vorzugsweise als ein monolithisches und/oder materialeinheitliches Bauteil ausgebildet ist.

Der Begriff einer ebenen Fläche schließt eine geringfügige Strukturierung der Oberfläche nicht aus wie sie bspw. zur Erreichung einer rutschfesten Oberfläche benötigt wird, was nachfolgend noch näher erläutert wird. Vielmehr ist mit dieser Formulierung gemeint, dass sich die Außenkontur des Regalbodens in Bezug auf die Oberseite bzw. die Unterseite im Wesentlichen durch jeweils eine Ebene beschreiben lässt, welche durch die vorab definierte Querrichtung und die hierzu orthogonal ausgerichtete Längsrichtung aufgespannt wird. Es sind somit keine Materialanhäufungen oder zusätzlichen Bauteile auf der Oberseite und/oder Unterseite des Regalbodens vorgesehen. Die Unterseite des Regalbodens ist diejenige Seite, welche bei herkömmlicher Verwendung des Regalbodens innerhalb eines Regallagersystems parallel oder im Wesentlichen parallel zum Boden ausgerichtet ist und dem Boden zugewandt ist. Als Oberseite des Regalbodens wird nachfolgend hingegen die Seite des Regalbodens bezeichnet, welche bei herkömmlicher Verwendung des Regalbodens innerhalb eines Regallagersystems parallel oder im Wesentlichen parallel zum Boden ausgerichtet ist und dem Boden abgewandt ist. In anderen Worten ist die Oberseite des Regalbodens die Nutzseite bzw. Nutzfläche des Regalbodens, welche zur Lagerung von Waren oder im Sinne einer Lauffläche als Verkehrsweg genutzt wird. Die Unterseite der Platte ist die der Oberseite gegenüberliegende Seite des Regalbodens, welche hingegen von Warenoder Fußgängern unberührt bleibt und üblicherweise (zumindest teilweise) auf einer Unterkonstruktion des Regallagersystems aufliegt.

Im Rahmen der Erfindung ist es weiterhin denkbar, dass in den Regalboden wenigstens ein insbesondere stabförmiges Bewehrungselement eingebettet ist, welches vorzugsweise aus Betonstahl (auch Bewehrungsstahl genannt) hergestellt ist. Hierdurch ergibt sich der Vorteil einer gesteigerten Zugfestigkeit sowie einer insgesamt höheren Tragfähigkeit des Regalbodens. Vorzugsweise ist das wenigstens eine Bewehrungselement vollständig in den Regalboden eingebettet. In anderen Worten ist das wenigstens eine Bewehrungselement vollständig von dem Material des Regalbodens umgeben und tritt an keiner Stelle des Regalbodens durch das Material des Regalbodens nach außen hindurch. Hierdurch ergibt sich der Vorteil, dass das wenigstens eine Bewehrungselement bestmöglich vor Umwelteinflüssen wie bspw. Feuchtigkeit geschützt wird und die Haltbarkeit und Zuverlässigkeit des Regalbodens verbessert wird. Idealerweise ist das Bewehrungselement (vollständig zu jeder Richtung) zumindest mit 5 mm, vorzugsweise 7 mm und besonders bevorzugt 10 mm von dem Beton überdeckt.

Das wenigstens eine Bewehrungselement kann in Bezug auf seine Längserstreckung entlang bzw. im Wesentlichen entlang der Längsrichtung des Regalbodens oder entlang bzw. im Wesentlichen entlang der Querrichtung des Regalbodens ausgerichtet sein und vorzugsweise mit in bzw. im Wesentlichen in einer von der Längsrichtung und der Querrichtung des Regalbodens aufgespannten Ebene liegen. Auch die Einbettung mehrerer, insbesondere identisch ausgebildeter Bewehrungselemente in den Regalboden ist im Rahmen der Erfindung denkbar. In diesem Zusammenhang können wenigstens zwei Bewehrungselemente in Bezug auf ihre Längserstreckung entlang der Querrichtung des Regalbodens ausgerichtet sein und parallel oder im Wesentlichen parallel zueinander verlaufen. Auch ist es denkbar, dass wenigstens zwei Bewehrungselemente in Bezug auf ihre Längserstreckung entlang der Längsrichtung des Regalbodens ausgerichtet sind und parallel oder im Wesentlichen parallel zueinander verlaufen. Ebenfalls ist es denkbar, dass wenigstens ein Bewehrungselement in Bezug auf seine Längserstreckung entlang der Querrichtung des Regalbodens ausgerichtet ist und wenigstens ein weiteres Bewehrungselement in Bezug auf seine Längserstreckung entlang der Längsrichtung des Regalbodens ausgerichtet ist und somit wenigstens zwei Bewehrungselemente orthogonal oder im Wesentlichen orthogonal zueinander ausgerichtet sind. Auch eine Ausrichtung der Bewehrungselemente entlang eines Winkels zwischen Längsrichtung und Querrichtung ist im Rahmen der Erfindung denkbar. Auch ist es im Rahmen der Erfindung denkbar, dass unterschiedliche Bewehrungselemente einen Versatz entlang der Tiefenrichtung des Regalbodens aufweisen. Besonders bevorzugt sind jedoch insbesondere diejenigen Bewehrungselemente, welche parallel oder im Wesentlichen parallel zueinander verlaufen in Bezug auf die Tiefenrichtung des Regalbodens an einer identischen oder im Wesentlichen identischen Position angeordnet.

Es kann im Rahmen der Erfindung vorgesehen sein, dass wenigstens zwei Bewehrungselemente, welche in den Regalboden eingebettet sind, untereinander verbunden sind. Ein Bewehrungselement kann auch mit mehreren anderen Bewehrungselementen verbunden sein. Hierbei kann es sich um eine kraftschlüssige, formschlüssige oder stoffschlüssige Verbindung handeln. Insbesondere ist es denkbar, dass die Bewehrungselemente durch Rödeldraht aneinander fixiert und/oder miteinander verschweißt sind.

Ein Vorteil der Erfindung kann darin bestehen, dass an der Unterseite des Regalbodens zur Verstärkung wenigstens zwei Stegelemente angeordnet und/oder ausgeformt sind, welche vorzugsweise mit dem Regalboden ein monolithisches Bauteil ausbilden. Hierdurch wird der Vorteil erzielt, dass eine auf der Oberseite des Regalbodens eingebrachte Belastung in die tragenden Stegelemente eingeleitet wird und die Tragfähigkeit des Regalbodens hierdurch erhöht wird. Die oben beschriebene, quaderförmige Ausbildung des Regalbodens wird somit durch die Anordnung der Stegelemente auf der Unterseite des Regalbodens erweitert. Es ergibt sich somit die Möglichkeit einer rein gedanklichen Aufteilung der Regalbodengeometrie in einen quaderförmigen Plattenabschnitt sowie mehrere Stegelemente (oder nur ein Stegelement), welche an der Unterseite dieses quaderförmigen Plattenabschnitts angeordnet ist. Der quaderförmige Plattenabschnitt und die Stegelemente können als separate Bauteile oder als ein monolithisches, insbesondere materialeinheitliches Bauteil ausgebildet sein. Der Begriff Regalboden umfasst in Sinne der vorliegenden Erfindung stets den quaderförmigen Plattenabschnitt des Regalbodens sowie alle an diesem angeordneten Stegelemente.

Da die Stegelemente an der Unterseite des quaderförmigen Plattenabschnitts des Regalbodens angeordnet sind, bleibt die geometrische Ausgestaltung der Oberseite des Regalbodens unbeeinflusst von den Stegelementen. Die geometrische Ausgestaltung der Unterseite des Regalbodens hingegen wird unmittelbar durch die Stegelemente beeinflusst, sodass fortan die Oberflächenkontur der Unterseite des Regalbodens zumindest abschnittsweise durch die an dem quaderförmigen Plattenabschnitt des Regalbodens angeordneten Stegelemente gebildet wird. Bei einem Lasteintrag in den Regalboden über die Oberseite des Regalbodens erfolgt ein Lastabtrag durch den quaderförmigen Plattenabschnitt des Regalbodens in die tragenden Stegelemente, welche somit zu einer Unterstützung des Regalbodens dienen und die Tragfähigkeit des Regalbodens erhöhen. Entsprechend ist es durch die Anordnung eines oder mehrerer Stegelemente möglich die Materialstärke bzw. Tiefe des quaderförmigen Plattenabschnitts des Regalbodens gegenüber einer geometrischen Gestaltung ohne Stegelemente zu reduzieren, wodurch sich der Vorteil einer Gewichtsreduktion des Regalbodens ergibt. Für den Fall, dass wenigstens drei Stegelemente an der Unterseite des Regalbodens angeordnet sind, ist es denkbar, dass die Stegelemente in äquidistanten Abständen zueinander angeordnet sind, wodurch sich der Vorteil einer möglichst gleichmäßigen Unterstützung des quaderförmigen Plattenabschnitts des Regalbodens ergibt.

Es ist im Rahmen der Erfindung denkbar, dass die Stegelemente als separate Bauteile ausgeführt sind und kraftschlüssig, formschlüssig oder Stoffschlüssig insbesondere reversibel mit dem quaderförmigen Plattenabschnitt des Regalbodens verbunden sind.

Hierbei ist es denkbar, dass die Stegelemente aus einem von dem quaderförmigen Plattenabschnitt des Regalbodens verschiedenen Werkstoff, insbesondere aus Stahl, oder aus dem gleichen Werkstoff, insbesondere Betonwerkstoff, wie der quaderförmigen Plattenabschnitt des Regalbodens gefertigt sind. Insbesondere können die Stegelemente durch Schraubverbindungen und/oder Klebeverbindungen an dem Regalboden und/oder einem Regallagersystem fixiert sein.

Insbesondere ist es im Rahmen der Erfindung aber auch denkbar, dass die Stegelemente mit dem quaderförmigen Plattenabschnitt des Regalbodens ein monolithisches und/oder materialeinheitliches Bauteil bilden. In anderen Worten bilden die Stegelemente mit dem quaderförmigen Plattenabschnitt des Regalbodens ein integrales Bauteil, wobei die Stegelemente irreversibel mit dem quaderförmigen Plattenabschnitt des Regalbodens verbunden sind. Eine zerstörungsfreie Trennung der Stegelemente von dem Rest des Regalbodens ist in diesem Falle somit nicht möglich. Dies bietet den Vorteil einer möglichst homogenen Verbindung zwischen Stegelementen und dem quaderförmigen Plattenabschnitt des Regalbodens, wodurch ein optimaler Lastabtrag von der Oberseite des Regalbodens in die Stegelemente ermöglicht wird. Auch vereinfacht die monolithische Ausbildung von Stegelementen und Regalboden die Fertigung des Regalbodens, da zusätzliche Montageschritte zum Anbringen der Stegelemente an dem Regalboden entfallen und keine Befestigungsmittel und/oder Gegenbefestigungsmittel in den Stegelementen sowie dem quaderförmigen Plattenabschnitt des Regalbodens vorgesehen werden müssen.

In einer die Erfindung verbessernden Maßnahme kann vorgesehen sein, dass wenigstens ein Stegelement des Regalbodens über einen trapezförmigen Querschnitt verfügt. Insbesondere ist es denkbar, dass es sich um ein symmetrisches Trapez handelt. Hiermit ist gemeint, dass das Trapez eine zu einer Seite des Trapezes senkrechte Symmetrieachse aufweist. Auch eine Ausgestaltung des Querschnitts als rechtwinkliges Trapez ist denkbar. Hiermit ist gemeint, dass das Trapez wenigstens zwei rechte Innenwinkel von 90° (Winkelgrad) aufweist, die nebeneinander liegen. In beiden Fällen weist das Trapez zwei parallel zueinander ausgerichtete Kanten auf, von denen eine Kante länger ist als die andere. Vorzugsweise ist es vorgesehen, dass wenigstens ein Stegelement derart am Regalboden bzw. am quaderförmigen Plattenabschnitt des Regalbodens angeordnet ist, dass die kürzere der beiden parallel ausgerichteten Kanten in Bezug auf den Regalboden nach außen orientiert ist und somit zumindest abschnittsweise eine Außenkante/Außenfläche bzw. Außenkontur des Regalbodens bildet. Die längere der beiden parallel ausgerichteten Kanten ist somit zu dem quaderförmigen Plattenabschnitt des Regalbodens orientiert bzw. liegt an diesem an. Ebenfalls ist es denkbar, dass der trapezförmige Querschnitt wenigstens eines Stegelements zumindest einen Innenwinkel aufweist welcher kleiner ist als 90° (Winkelgrad), bevorzugt kleiner ist als 80° (Winkelgrad), besonders bevorzugt kleiner oder gleich 78° (Winkelgrad) ist sowie insbesondere größer oder gleich 45° (Winkelgrad), bevorzugt größer als 60° (Winkelgrad), besonders bevorzugt größer als 70° (Winkelgrad) ist. Hierdurch wird der Vorteil einer möglichst optimalen Abstützung der auf der Oberseite des Regalbodens eingebrachten Lasten durch das Stegelement erzielt und die Tragfähigkeit des Regalbodens erhöht. Natürlich sind im Rahmen der Erfindung auch weitere, insbesondere quadratische bzw. im Wesentlichen quadratische und rechteckige bzw. im Wesentlichen Rechteckige Querschnittsformen für die Stegelemente denkbar.

Im Rahmen der Erfindung ist es denkbar, dass wenigstens ein Stegelement einen Querschnitt in Form eines symmetrischen Trapezes aufweist und wenigstens ein anderes Stegelement einen Querschnitt in Form eines rechtwinkligen Trapezes aufweist. Das wenigstens eine Stegelement mit der Querschnittsform eines rechtwinkligen Trapezes kann in Bezug auf seine Längserstreckung insbesondere entlang einer Außenkante des Regalbodens verlaufen und an der Außenkante des Regalbodens insbesondere bündig mit diesem abschließen. Das wenigstens eine Stegelement mit dem Querschnitt eines symmetrischen Trapezes kann hingegen in Bezug auf seine Längserstreckung einen Versatz zu wenigstens einer Außenkante des Regalbodens aufweisen. Hierdurch ergibt sich der Vorteil, dass der Regalboden an seinen Außenkanten ausschließlich orthogonal zur Oberseite gerichtete Flächen aufweist. Hierdurch können mehrere Regalböden bündig zueinander ausgerichtet und in einen möglichst großflächigen Kontakt gebracht werden, sodass punktuelle oder linienförmige Lasteinträge über die Außenkanten der Regalböden sowie daraus resultierende Beschädigungen vermieden werden.

Im Rahmen der Erfindung kann es weiterhin vorgesehen sein, dass in wenigstens ein Stegelement zur Erhöhung der Tragfähigkeit wenigstens ein insbesondere stabförmiges Bewegungselement eingebettet ist, welches vorzugsweise aus Betonstahl hergestellt ist.

Hierdurch ergibt sich der Vorteil einer gesteigerten Zugfestigkeit sowie einer insgesamt höheren Tragfähigkeit des Regalbodens. Vorzugsweise ist das Bewehrungselement vollständig in das Stegelement eingebettet. In anderen Worten ist das Bewehrungselemente vollständig von dem Material des Stegelements umgeben und tritt an keiner Stelle des Stegelementes durch das Material des Stegelements nach außen hindurch. Hierdurch ergibt sich der Vorteil, dass das Bewehrungselement bestmöglich vor Umwelteinflüssen wie bspw. Feuchtigkeit geschützt wird und die Haltbarkeit und Zuverlässigkeit des Regalbodens verbessert wird.

In einer die Erfindung verbessernden Maßnahme kann es weiterhin vorgesehen sein, dass wenigstens ein Stegelement des Regalbodens als Quersteg ausgebildet ist. Hiermit ist gemeint, dass das wenigstens eine Stegelement in Bezug auf seine Längserstreckung entlang der Querrichtung des Regalbodens ausgerichtet ist. Bevorzugt ist der wenigstens eine Quersteg derart dimensioniert, dass seine Längserstreckung betragsmäßig der Breite des Regalbodens entspricht. Hierdurch ergibt sich der Vorteil, dass die Tragrichtung des wenigstens einen Querstegs orthogonal zur Haupttragrichtung des Regalbodens ausgerichtet ist sowie dass der Regalboden entlang seiner ganzen Breite durch den wenigstens einen Quersteg verstärkt und die Tragfähigkeit des Regalbodens somit bestmöglich gesteigert wird. Besonders bevorzugt kann es weiterhin vorgesehen sein, dass wenigstens zwei Stegelemente des Regalbodens als Quersteg ausgebildet sind und insbesondere an jeweils einer Außenkante, vorzugsweise einer Querseite des Regalbodens derart angeordnet sind, dass sie nach außen bündig mit dieser abschließen.

Im Rahmen der Erfindung kann es von Vorteil sein, dass wenigstens ein Stegelement des Regalbodens als Längssteg ausgebildet ist. Hiermit ist gemeint, dass das wenigstens eine Stegelement in Bezug auf seine Längserstreckung entlang der Längsrichtung des Regalbodens ausgerichtet ist. Besonders bevorzugt ist der wenigstens eine Längssteg derart dimensioniert, dass seine Längserstreckung betragsmäßig der Länge des Regalbodens entspricht. Hierdurch ergibt sich der Vorteil, dass ein zweiachsiger Lastabtrag realisiert werden und die Verformung des Regalbodens unter Lasteinfluss reduziert werden kann. Bevorzugt kann es auch vorgesehen sein, dass an dem Regalboden wenigstens zwei Längsstege angeordnet sind und insbesondere an jeweils einer Außenkante, vorzugsweise einer Längsseite des Regalbodens derart angeordnet sind, dass sie nach außen bündig mit dieser abschließen.

Im Rahmen der Erfindung ist es ferner denkbar, dass an der Unterseite des Regalbodens bzw. des quaderförmigen Plattenabschnitts des Regalbodens wenigstens ein Quersteg und wenigstens ein Längssteg angeordnet ist. Hierbei kann der wenigstens eine Längssteg mit dem wenigstens einen Quersteg verschnitten sein, also eine gemeinsame monolithische und insbesondere materialeinheitliche Struktur ausbilden. Insbesondere können wenigstens zwei Längsstege und wenigstens zwei Querstege an dem Regalboden angeordnet und/oder ausgebildet sein. Hierbei können die wenigstens zwei Querstege an jeweils einer Querseite des Regalbodens angeordnet sein und insbesondere bündig mit der Außenkante des Regalbodens abschließen. Auch können die beiden Längsstege an jeweils einer Längsseite des Regalbodens angeordnet sein und insbesondere bündig mit der Außenkante des Regalbodens abschließen. In anderen Worten können die beiden Längsstege und die beiden Querstege derart angeordnet und miteinander verschnitten sein, dass sie einen umlaufenden Rand an der Unterseite des Regalbodens bilden, welcher insbesondere bündig mit der Außenseite des Regalbodens abschließt. Hierdurch wird der Vorteil erreicht, dass der Regalboden durch die Stegelemente gestützt und in seiner Tragfähigkeit gesteigert wird und gleichzeitig die Stegelemente eine umlaufende Auflagefläche für eine vollumfängliche Auflage des Regalbodens auf einer Unterkonstruktion eines Regallagersystems bilden. Natürlich ist es denkbar, dass die genannte Anordnung von wenigstens zwei Längsstegen und wenigstens zwei Querstegen um weitere Längsstege und/oder Querstege ergänzt wird. Hierbei können die Querstege und Längsstege an den jeweiligen Kreuzungspunkten miteinander verschnitten sein und somit eine monolithische und insbesondere materialeinheitliche Gitterstruktur bilden.

Im Rahmen der Erfindung ist es optional möglich, dass wenigstens ein in einen Quersteg eingebettetes Bewehrungselement mit wenigstens einem in einen Längssteg eingebetteten Bewehrungselement kraftschlüssig und/oder formschlüssig und/oder stoffschlüssig verbunden ist. Insbesondere ist es denkbar, dass die Bewehrungselemente durch Rödeldraht aneinander befestigt und/oder miteinander verschweißt sind. Hierdurch ergibt sich der Vorteil, dass eine verbesserte Endverankerung der Bewehrungselemente realisiert wird.

Im Rahmen der Erfindung ist es denkbar, dass der Regalboden zur Erhöhung der Biegezugfestigkeit sowie zur Erreichung eines duktileren Materialverhaltens aus einem faserverstärkten Beton hergestellt ist. In anderen Worten wird dem Beton vor der Herstellung des Regalbodens Fasermaterial beigefügt, wodurch eine Faserbewehrung des Werkstücks bzw. des Regalbodens realisiert wird. Hierdurch ergibt sich der Vorteil, dass die Belastbarkeit des Regalbodens bei gleichbleibender Materialstärke gesteigert wird und die Gefahr eines Sprödbruchs reduziert werden kann.

Es kann hierbei vorgesehen sein, dass zur Faserbewehrung insbesondere glatte und/oder gerade Stahlfasern und/oder Kunststofffasern und/oder Carbonfasern in dem faserverstärkten Beton beinhaltet sind. Es ist hierbei denkbar, dass lediglich ein Fasermaterial zur Faserbewehrung verwendet wird, wodurch sich der Vorteil einer reduzierten Komplexität des Fertigungsprozesses ergibt. Im Rahmen der Erfindung ist es jedoch ebenfalls denkbar, dass eine Mischung aus mehreren Fasermaterialien zur Faserbewehrung des Regalbodens eingesetzt wird, wodurch sich der Vorteil einer möglichst flexiblen Beeinflussung der Materialeigenschaften des Regalbodens ergibt. Durch die Verwendung von Stahlfasern ergibt sich der Vorteil einer erhöhten Stabilität des faserbewehrten Regalbodens. Bei der Verwendung von Stahlfasern ist es insbesondere auch denkbar, dass Edelstahlfasern verwendet werden. Hierdurch ergibt sich der Vorteil, dass das Fasermaterial widerstandsfähig gegenüber Umwelteinflüssen ist und nicht oder nicht wesentlich korrodiert. Dies betrifft insbesondere Fasern, welche an der Oberfläche des Regalbodens zumindest abschnittsweise mit der Umgebung in Kontakt kommen und somit nicht vollständig in das Material des Regalbodens eingebettet sind. Bei der Verwendung von Kunststofffasern ergibt sich der Vorteil, dass diese eine gewichtssparende Gestaltung des Regalbodens ermöglichen und gleichzeitig günstig in der Anschaffung sind. In diesem Zusammenhang ist insbesondere die Verwendung von Fasern aus Polypropylen (PP) denkbar. Auch eine Verwendung von Glasfasern, insbesondere die Verwendung alkaliresistenter Glasfasern ist im Rahmen der Erfindung denkbar.

Im Rahmen der Erfindung ist es vorstellbar, dass, dass die zur Faserbewehrung verwendeten Fasern eine Länge zwischen 5 mm und 20 mm, insbesondere zwischen 10 mm und 15 mm, bevorzugt zwischen 12 und 14 mm aufweisen und/oder einen Durchmesser zwischen 0,1 mm und 0,25 mm, insbesondere zwischen 0,15 und 0,22 mm, bevorzugt zwischen 0,17 mm und 0,19 mm aufweisen. Besonders bevorzugt kann die Länge der Fasern 13 mm und der Durchmesser der Fasern 0,18 mm betragen. Hierdurch ergibt sich der Vorteil einer einfachen Handhabung und Verarbeitung der Fasern im Herstellungsprozess des Regalbodens bei einer gleichzeitig ausreichenden Biegezugfestigkeit und Duktilität des Regalbodens durch die Faserbewehrung.

Ebenfalls ist es im Rahmen der Erfindung denkbar, dass der faserverstärkte Beton einen Faseranteil zwischen 0,5 Vol.-% und 2,5 Vol.-%, insbesondere zwischen 0,7 Vol.-% und 2 Vol.-%, bevorzugt zwischen 0,8 Vol.-% und 1,2 Vol.-% aufweist. Besonders bevorzugt kann der faserverstärkte Beton einen Faseranteil von 1 Vol.-% aufweisen. Hierdurch ergibt sich der Vorteil einer einfachen Handhabung und Verarbeitung des Faserbetons im Herstellungsprozess des Regalbodens bei einer gleichzeitig ausreichenden Biegezugfestigkeit und Duktilität des Regalbodens durch die Faserbewehrung.

Hinsichtlich der geometrischen Ausgestaltung des Regalbodens ist es denkbar, dass der Regalboden eine rechteckige oder im Wesentlichen rechteckige Form aufweist, wobei der Regalboden vorzugsweise eine Länge von 1300 mm und/oder eine Breite von 680 mm und/oder eine Tiefe bzw. Materialstärke von 38 mm aufweist. Hierdurch wird der Vorteil erzielt, dass ein Regalboden mit ausreichender Tragfähigkeit bei gleichzeitigem Verzicht auf etwaige Längsstege realisiert werden kann. Natürlich ist es jedoch auch bei den genannten Maßen im Rahmen der Erfindung denkbar, dass insbesondere bei außergewöhnlich hohen Traglastanforderungen auch bei den genannten geometrischen Abmessungen wenigstens ein Längssteg an dem Regalboden angeordnet wird. Unabhängig von der geometrischen Dimensionierung des Regalbodens kann es weiterhin vorgesehen sein, dass wenigstens zwei, bevorzugt wenigstens 4, besonders bevorzugt wenigstens 6 Querstege an der Unterseite des Regalbodens angeordnet sind, wobei zwei dieser Querstege an jeweils einer Außenkante des Regalbodens angeordnet sind und nach außen bündig mit dieser abschließen. Idealerweise weist hierbei jedes Stegelement zumindest ein (stabförmiges) Bewehrungselement auf.

Die Materialstärke des Regalbodens kann unabhängig von der geometrischen Gestaltung des Regalbodens abschnittsweise variieren. So kann die Materialstärke des Regalbodens im Bereich eines Stegelements deutlich größer sein als in einem Bereich, wo kein Stegelement an dem quaderförmigen Plattenabschnitt des Regalbodens anliegt. In diesem Zusammenhang ist es also denkbar, dass die kombinierte Materialstärke des quaderförmigen Plattenabschnitts des Regalbodens sowie eines Stegelements des Regalbodens die maximale Materialstärke des Regalbodens ergibt. Sind keine Stegelemente an dem Regalboden angeordnet, so ergibt sich die maximale Materialstärke aus der Materialstärke des quaderförmigen Plattenabschnitts des Regalbodens allein. Es kann hierbei als vorteilhaft angesehen werden, wenn die maximale Materialstärke des Regalbodens in Bezug auf eine Richtung senkrecht zur Oberfläche des Regalbodens zwischen 25 mm und 50 mm, bevorzugt zwischen 30 mm und 45 mm, besonders bevorzugt genau 38 mm beträgt. Besonders bevorzugt ist es hierbei, wenn die Materialstärke des Stegelements, insbesondere in Bezug auf eine Richtung senkrecht zur Oberfläche des Regalbodens, zwischen 20 mm und 35 mm, bevorzugt zwischen 25 mm und 30 mm, besonders bevorzugt genau 28 mm beträgt. Vorteilhaft kann es weiterhin sein, wenn die Materialstärke des quaderförmigen Plattenabschnitts des Regalbodens in Bezug auf eine Richtung senkrecht zur Oberfläche des Regalbodens zwischen 5 mm und 15 mm, bevorzugt zwischen 8 mm und 12 mm, besonders bevorzugt genau 10 mm beträgt. Hierdurch ergibt sich der Vorteil einer besonders materialsparenden Gestaltung und somit gewichtseffizienten Bauweise des Regalbodens bei gleichzeitig hoher Tragfähigkeit.

Ferner kann es im Rahmen der Erfindung vorgesehen sein, dass die Oberseite des Regalbodens mit einer Struktur und/oder Beschichtung (z.B. in Form einer Körnung) versehen ist. Hierdurch ergibt sich der Vorteil, dass die Rutschfestigkeit und/oder wie Widerstandsfähigkeit der Oberfläche des Regalbodens gesteigert werden kann. Dies ist insbesondere dann von Vorteil, wenn der Regalboden als Lauffläche oder als Lagerfläche für aggressive Materialien genutzt wird. Außerdem kann insbesondere durch das Aufbringen einer Beschichtung der Regalboden vor äußeren Einflüssen geschützt werden. Bei der Beschichtung kann es sich um eine irreversibel mit dem Beton verbundene Schicht handeln, welche als Flüssigkeit auf den Regalboden aufgebracht und anschließend einer Trocknung und/oder Härtung unterzogen wurde. Auch kann die Beschichtung in Form eines separaten Bauteils wie einer Matte und/oder eines Gitters ausgebildet sein, welches auf die Oberfläche des Regalbodens aufgelegt wird. Die Abmessungen dieses Bauteils entsprechen hierbei bevorzugt genau den Abmessungen der Oberfläche des Regalbodens. Hierdurch ergibt sich der Vorteil, dass die Oberfläche des Regalbodens vollflächig durch die Beschichtung geschützt wird. Eine Struktur in der Oberfläche des Regalbodens kann diesem insbesondere bereits bei der Fertigung durch Verwendung einer Strukturmatrize aufgeprägt werden. So können insbesondere rutschhemmende Strukturen wie eine Betosieb-Struktur auf der Oberfläche des Regalbodens realisiert werden. Dies bietet den Vorteil einer möglichst effizienten Herstellung des Regalbodens, da für das Aufbringen einer Struktur auf die Oberfläche des Regalbodens keine weitere Nachbearbeitung erforderlich ist.

Ein weiterer Vorteil der Erfindung kann darin liegen, dass der Regalboden an wenigstens einer Außenkante eine Nut und/oder eine Feder aufweist. Hierdurch kann eine Verbindung zwischen zwei Regalböden hergestellt werden, wobei diese formschlüssig und/oder kraftschlüssig miteinander verbunden werden indem in ein Nutelement eines ersten Regalbodens ein Federelement eines zweiten Regalbodens eingeführt wird. Auch ist hierdurch eine Verbindung zwischen wenigstens einem Regalboden und einer für die Regalböden bereitgestellten Unterkonstruktion bzw. Haltekonstruktion eines Regallagersystems denkbar, indem ein Regalboden über ein Nutelement und die Haltekonstruktion des Regallagersystem über ein passendes Federelement oder umgekehrt verfügt. Hieraus ergibt sich der Vorteil, dass sowohl die Regalböden untereinander als auch die Regalböden an der Haltekonstruktion des Regallagersystems positioniert und ausreichend fixiert werden können, so dass eine ungewollte Verschiebung der Regalböden vermieden wird. Im Rahmen der Erfindung ist es denkbar, dass die Nut und/oder Feder an dem quaderförmigen Plattenabschnitt des Regalbodens angeordnet ist. Ebenfalls ist es denkbar, dass die Nut und/oder Feder an wenigstens einem Stegelement angeordnet ist.

Im Rahmen der Erfindung ist es denkbar, dass als Werkstoff für die Bewehrungselemente insbesondere ein hochduktiler Betonstahl zum Einsatz kommt. Bevorzugt kann es sich um einen Betonstahl der Klassifizierung B500B handeln. Bewehrungselemente aus Betonstahl bieten den Vorteil einer hohen Dehnbarkeit und Zugfestigkeit bei gleichzeitig geringen Kosten. Auch die Verwendung von Bewehrungselementen aus anderen Werkstoffen ist prinzipiell durch den Gedanken der Erfindung umfasst. Hierbei ist insbesondere eine Verwendung von Bewehrungselementen aus Glas- oder Carbonfaserverstärktem Kunststoff (GFK oder CFK) denkbar. Aufgrund des geringen Gewichts dieser Werkstoffe im Vergleich zu Bewehrungselementen aus Betonstahl, ergibt sich der Vorteil einer besonders leichten Bauweise des erfindungsgemäßen Regalbodens, was die Handhabbarkeit der Regalböden im Rahmen der Fertigung bzw. der Montage innerhalb eines Regallagersystems verbessert. Vorzugsweise sind alle in den Regalboden eingebetteten Bewehrungselemente aus dem gleichen Werkstoff ausgeführt. Auch die Verwendung von Bewehrungselementen unterschiedlicher Materialien ist im Rahmen der Erfindung jedoch denkbar.

Vorzugsweise sind die Bewehrungselemente stabförmig ausgebildet und/oder verfügen über einen kreisrunden oder im wesentlichen kreisrunden Querschnitt. Hierbei ist es denkbar, dass die Bewehrungselemente einen Durchmesser zwischen 4 mm und 12 mm, bevorzugt zwischen 5 mm und 10 mm, besonders zwischen 6 mm und 8 mm aufweisen. Auch rechteckige, quadratische oder vieleckige Querschnittsformen der Bewehrungselemente sind durch den Gedanken der Erfindung umfasst. Vorzugsweise verfügen alle in den Regalboden eingebetteten Bewehrungselemente oder zumindest alle in den Regalboden (eingebetteten Bewehrungselemente mit einer gleichen oder im Wesentlichen gleichen räumlichen Orientierung über den gleichen Durchmesser bzw. die gleichen Querschnittsdimensionen. Hierdurch ergibt sich der Vorteil einer vereinfachten Herstellung des Regalbodens sowie der effektiven Vermeidung von Produktionsfehlern, da einer Positionierung von Bewehrungselementen mit falschen Querschnittsdimensionen an fehlerhaften Positionen innerhalb des Regalbodens vorgebeugt wird. Ebenfalls ist es im Rahmen der Erfindung jedoch denkbar, dass nicht alle Bewehrungselemente die gleiche Querschnittsform und/oder die gleichen Abmessungen aufweisen. Hierdurch ergibt sich der Vorteil, dass die Unterstützung des Regalbodens durch die Bewehrungselemente auf den örtlichen Lasteintrag angepasst werden kann und eine kostenintensive Überdimensionierung somit vermieden werden kann. Vorzugsweise weisen die Bewehrungselemente Rippen auf, wodurch der Vorteil eines optimalen Verbunds mit dem umgebenden Material des Regalbodens erzielt wird.

Ebenfalls ist es im Rahmen der Erfindung denkbar, dass wenigstens ein Bewehrungselement des Regalbodens mit einer Vorspannung beaufschlagt wird, bevor es in den Regalboden eingebettet wird bzw. dass das Bewehrungselement unter Einfluss dieser Vorspannung in den Regalboden eingebettet wird. Hierdurch ergibt sich der Vorteil, dass über dieses wenigstens eine Bewehrungselement Druckspannungen auf das umgebende Material des Regalbodens übertragen werden, wodurch einer Rissbildung vorgebeugt und die Haltbarkeit und Zuverlässigkeit des Regalbodens somit verbessert wird.

Zudem wird die oben stehende Aufgabe gelöst durch ein Regallagersystem, welches wenigstens einen Regalaufbau mit wenigstens einer Lagerfläche und /oder wenigstens einer Lauffläche umfasst, wobei wenigstens eine Lagerfläche und/oder eine Lauffläche des Regallagersystems zumindest abschnittsweise durch einen erfindungsgemäßen Regalboden ausgebildet ist. Durch die Verwendung von erfindungsgemäßen Regalböden im einem Regallagersystem wird die durch das Regallagersystem in ein Gebäude eingebrachte Brandlast erheblich gesenkt, da die Regalböden aus Beton hergestellt sind und somit nicht entflammbar bzw. brennbar sind. Außerdem sind die erfindungsgemäßen Regalböden unempfindlich gegenüber Feuchtigkeit, sodass auch der Einsatz einer Sprinkleranlage keinen flächendeckenden Austausch der Regalböden innerhalb eines erfindungsgemäßen Regallagersystems erfordert. Vorteilhafterweise weisen sämtliche Regalböden des Regallagersystems Beton auf.

Auch ist es denkbar, dass wenigstens ein Regalboden des Regallagersystems zur eindeutigen Kennzeichnung einer zugehörigen Flächenfunktion eingefärbt und/oder markiert ist. Eine Flächenfunktion kann beispielsweise bedeuten, dass es sich um eine Fläche zur Lagerung handelt oder um Fläche welche als Verkehrsweg und/oder Fußweg genutzt wird. Auch kann durch eine entsprechende Markierung und/oder Farbgebung einer Fläche auf etwaige Gefahren hingewiesen werden, welche zum Beispiel von in dem Regallagersystem befindlichen Waren ausgehen. Hierbei ist es denkbar, dass wenigstens ein Regalboden zumindest abschnittsweise eingefärbt und/oder markiert ist. Es kann sich weiterhin jedoch auch um eine vollständige bzw. vollflächige Einfärbung oder Markierung eines oder mehrerer Regalböden handeln. In diesem Zusammenhang ist es denkbar, dass der zur Herstellung der Regalböden verwendete Beton mit Additiven, insbesondere Farbpigmenten versetzt wurde, wodurch die gewünschte Farbgebung des Betons und damit des Regalbodens erzielt werden kann. Durch eine Einfärbung und/oder Markierung bestimmte Flächen innerhalb eines Regallagersystems kann der Vorteil erzielt werden, dass die Funktion spezifischer Flächen für Personen, welche sich innerhalb des Regallagersystems bewegen, unmittelbar ersichtlich wird. Somit können beispielsweise Laufflächen und Lagerflächen eindeutig voneinander getrennt werden oder Gefahrenpotentiale visuell hervorgehoben werden.

Entsprechend lassen sich Arbeitsabläufe effizienter gestalten und Arbeitsunfällen kann wirksam vorgebeugt werden.

Vorteilhaft kann es im Rahmen der Erfindung weiterhin sein, wenn das Regallagersystem zur Aufnahme der erfindungsgemäßen Regalböden über eine Unterkonstruktion aus Hut- und/oder C-Profilen verfügt. Die Regalböden können formschlüssig und/oder kraftschlüssig, insbesondere reversibel auf der Unterkonstruktion des Regallagersystems befestigt werden. Zur Befestigung der Regalböden an der Unterkonstruktion des Regallagersystems können vorzugsweise selbstschneidende Schrauben verwendet werden. Für die Durchführung dieser Schrauben können in den Regalböden entsprechende Löcher vorgesehen werden. Hierdurch ergibt sich der Vorteil, dass ein Ausknicken bzw. Kippen der Unterkonstruktion des Regallagersystems vermieden wird, da eine zugfeste Verbindung zwischen dem Regalboden und der Unterkonstruktion des Regallagersystems hergestellt wird. Die Unterkonstruktion des Regallagersystems ist vorzugsweise zumindest teilweise aus (feuerverzinktem) Stahl hergestellt, wodurch eine hohe Belastbarkeit und Langlebigkeit des Regallagersystems erzielt wird.

Zusätzlich wird die obenstehende Aufgabe gelöst durch ein Verfahren zur Herstellung eines erfindungsgemäßen Regalbodens, wobei die folgenden Schritte durchgeführt werden:
a) Vorbereiten einer Form oder Schalung zur Aufnahme von flüssigem Beton, welche die äußere Kontur des herzustellenden Regalbodens als Negativ abbildet
b) Anmischen des Betons zur weiteren Verarbeitung
c) Einfüllen des Betons in die Form oder Schalung
d) Trennen der Form oder Schalung von dem Regalboden sobald der Beton in ausreichender Weise ausgehärtet ist.

Die Form oder Schalung sollte hierbei bevorzugt erst dann von dem Regalboden getrennt werden, wenn die Aushärtung des Betons soweit fortgeschritten ist, dass eine Trennung der Form oder Schalung von dem Regalboden keine Geometrieänderung des Regalbodens nach sich zieht. In anderen Worten soll eine Trennung der Schalung oder Form von dem Regalboden erst dann erfolgen, wenn der Beton soweit ausgehärtet ist, dass der Regalboden formstabil ist. Das Anmischen des Betons zur weiteren Verarbeitung beinhaltet die Vermischung eines Bindemittels wie Zement mit einem Zuschlagstoff, insbesondere einer Gesteinskörnung und Wasser, sodass der Beton bereit ist für die weitere Verarbeitung.

Im Rahmen der Erfindung ist es denkbar, dass der Verfahrensschritt a) zusätzlich wenigstens einen der folgenden Schritte umfasst:
- Einsetzen wenigstens eines Bewehrungselementes bzw. einer Bewehrungskonstruktion aus mehreren Bewehrungselementen in die Form oder Schalung
- Herstellen einer formschlüssigen und/oder kraftschlüssigen und/oder stoffschlüssigen Verbindung zwischen wenigstens zwei Bewehrungselementen
- Aufbringen eines insbesondere hydrophoben Trennmittels (z.B. flüssigem Latex) auf die Innenseite der Form oder Schalung.
- Vorbereiten eines Deckels für die Form oder Schalung wobei insbesondere eine Strukturmatrize auf einer Seite des Deckels angeordnet wird

Im Rahmen der Erfindung ist es denkbar, dass der Verfahrensschritt b) zusätzlich den folgenden Schritt umfasst:
- Hinzugabe von Additiven zu der Betonmischung, insbesondere Bewehrungsfasern und/oder Farbpigmente und/oder Zuschlagstoff für Feuchtedichtigkeit

Im Rahmen der Erfindung ist es weiterhin denkbar, dass der Verfahrensschritt c) zusätzlich den folgenden Schritt umfasst:
- Verschließen der Form oder Schalung mit einem Deckel, wobei der Deckel vorzugsweise mit wenigstens einer Seite zur Oberfläche des Regalbodens orientiert ist und bevorzugt mit der Oberfläche des Regalbodens in Kontakt kommt, wobei insbesondere auf der Seite des Deckels die mit der Oberseite des Regalbodens in Kontakt kommt, eine Strukturmatrize zur Prägung einer Struktur in die Oberseite des Regalbodens angeordnet ist.

Es ist erfindungsgemäß denkbar, dass der flüssige Beton unter Verwendung einer Pumpvorrichtung in die Form oder Schalung hineingepumpt wird. Insbesondere bei der Verwendung von Faserbeton kann hierdurch der Vorteil erzielt werden, dass sich die Fasern in Bezug auf ihre Längserstreckung entlang der Fließrichtung des Betons ausrichten und die Wirksamkeit der Faserbewehrung somit erhöht wird.

Schließlich kann die Oberfläche des Regalbodens teilweise oder vollständig beschichtet und/oder versiegelt werden, um den Regalboden besser zu schützen (z. B. Farbgestaltung, wasserfeste Beschichtung usw.) oder den Komfort zu verbessern (z. B. Rutschschutz, Körnung etc.).

Auch ist es im Rahmen der Erfindung denkbar, dass ein erfindungsgemäßer Regalboden als Bodenbelag für Fußgängerbrücken, Balkone, Revisionsgänge oder dergleichen verwendet wird, insbesondere als Ersatz für in diesem Zusammenhang verwendete Gitterroste. Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei ist die Erfindung in den folgenden Figuren gezeigt:
- Fig. 1: eine Draufsicht eines erfindungsgemäßen Regalbodens,
- Fig. 2: eine Seitenansicht eines erfindungsgemäßen Regalbodens,
- Fig. 3: eine Draufsicht eines erfindungsgemäßen Regalbodens mit einer schematischen Darstellung von Bewehrungselementen,
- Fig. 4: eine Seitenansicht eines erfindungsgemäßen Regalbodens mit einer schematischen Darstellung von Bewehrungselementen,
- Fig. 5: eine Draufsicht eines erfindungsgemäßen Regalbodens mit Querstegen,
- Fig. 6: eine Seitenansicht eines erfindungsgemäßen Regalbodens mit Querstegen,
- Fig. 7: eine Darstellung einer möglichen Querschnittsform der Stegelemente,
- Fig. 8: eine Darstellung einer möglichen Querschnittsform der Stegelemente,
- Fig. 9: eine Draufsicht eines erfindungsgemäßen Regalbodens mit Querstegen und Längsstegen,
- Fig. 10: eine Seitenansicht eines erfindungsgemäßen Regalbodens mit Querstegen und Längsstegen,
- Fig. 11: eine Draufsicht eines erfindungsgemäßen Regalbodens mit einer strukturierten und/oder beschichteten Oberfläche,
- Fig. 12: ein erfindungsgemäßes Regallagersystem, und
- Fig. 13: ein erfindungsgemäßes Verfahren zur Herstellung eines erfindungsgemäßen Regalbodens.

In den nachfolgenden Figuren sowie deren Beschreibung werden für die gleichen technischen Merkmale auch von unterschiedlichen Ausführungsbeispielen die identischen Bezugszeichen verwendet.

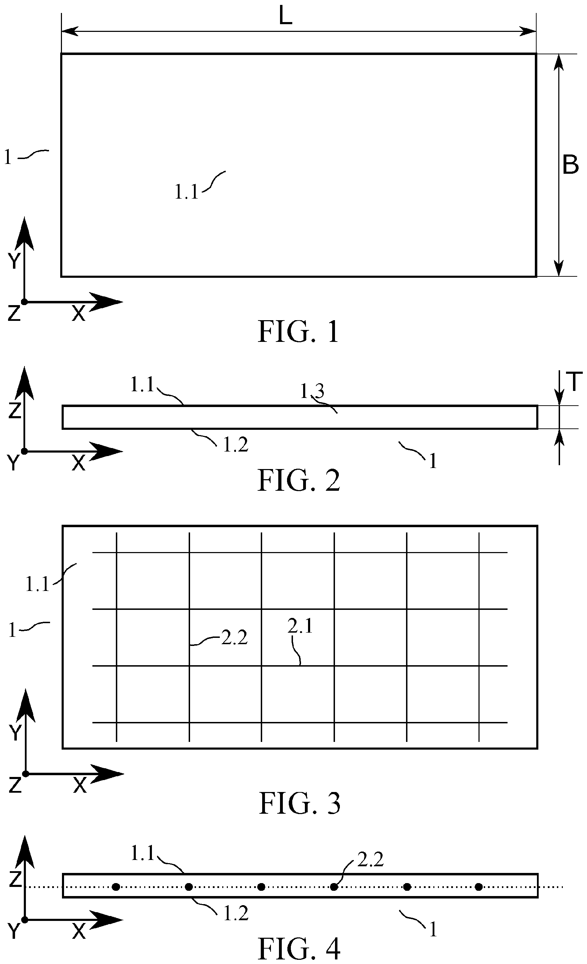

Fig.1 zeigt eine Draufsicht auf einen erfindungsgemäßen Regalboden 1, wobei der Regalboden 1 aus Beton hergestellt ist. Dies bietet den Vorteil, dass der Regalboden 1 weder entflammbar noch empfindlich gegenüber Wasser und/oder Feuchtigkeit ist. Insbesondere ist es denkbar, dass der Regalboden 1 aus einem sehr weichen, bevorzugt fließfähigem, besonders bevorzugt selbstverdichtendem Beton hergestellt ist, wodurch die gewünschte Geometrie des Regalbodens 1 im Fertigungsprozess optimal am Werkstück realisiert werden kann. Auch ist es denkbar, dass der Regalboden 1 aus einem hochfesten Beton hergestellt ist, wodurch eine ausreichende Druckfestigkeit des Regalbodens 1 sichergestellt wird. Bezogen auf die in Fig. 1 dargestellte Draufsicht auf den Regalboden 1, weist dieser einen rechteckigen Querschnitt auf. Entsprechend weist der Regalboden 1 in Bezug auf die dargestellte Draufsicht eine Erstreckung in der Längsrichtung X auf, welche nachfolgend als Länge L bezeichnet wird. Weiterhin weist der Regalboden 1 eine Erstreckung in Querrichtung Y auf, welche nachfolgend als Breite B bezeichnet wird. Die Längsrichtung X und die Querrichtung Y sind orthogonal zueinander ausgerichtet. Die Angabe der Breite B bezieht sich somit auf die kürzere Seite der rechteckigen Form des Regalbodens 1, während sich die Länge L auf die längere Seite der rechteckigen Form des Regalbodens 1 bezieht. Eine quadratische Form des Regalbodens 1 ist ebenfalls denkbar, wobei in diesem Fall die die Länge L der Breite B des Regalbodens 1 entspricht und umgekehrt. Auch andere Formen des Regalbodens 1 sind denkbar. Insbesondere auch solche Formen bei denen ein im Wesentlichen rechteckiger oder quadratischer Querschnitt vorliegt.

Fig. 2 zeigt den Regalboden 1 aus Fig. 1 in der Seitenansicht. Es wird ersichtlich, dass der Regalboden 1 eine Erstreckung in Tiefenrichtung Z aufweist, welche nachfolgend als Tiefe bzw. Materialstärke T bezeichnet wird. Die Tiefenrichtung Z ist sowohl orthogonal zur Längsrichtung X als auch orthogonal zur Querrichtung Y ausgerichtet. Die Längsrichtung L, die Querrichtung X und die Tiefenrichtung Z bilden somit ein dreidimensionales kartesisches Koordinatensystem.

Sowohl die Oberseite 1.1 als auch die Unterseite 1.2 des in den Figuren 1 und 2 dargestellten Regalbodens 1 sind als ebene Flächen ausgestaltet, da weder zusätzliche Bauteile noch Materialanhäufungen auf der Oberseite 1.1 und/oder der Unterseite 1.2 des Regalbodens 1 vorgesehen sind. Somit ergibt sich für den Regalboden 1 die Form einer quaderförmigen Platte 1.3. Weiterhin ist der Regalboden 1 gemäß der Figuren 1 und 2 als monolithisches und materialeinheitliches Bauteil aus Beton ausgebildet. Die Oberseite 1.1 des Regalbodens 1 ist diejenige Seite des Regalbodens 1, welche zur Lagerung von Waren oder als Verkehrsweg von Fußgängern oder Fahrzeugen genutzt wird. Die Unterseite 1.2 des Regalbodens 1 liegt der Oberseite 1.1 gegenüber und ist bei einer herkömmlichen Verwendung des Regalbodens 1 in einem Regallagersystem dem Boden zugewandt und parallel zum Boden, insbesondere horizontal ausgerichtet.

Fig. 3 zeigt einen Regalboden 1 mit einer geometrischen Ausgestaltung gemäß der Figuren 1 und 2, wobei in den Regalboden 1 mehrere stabförmige Bewehrungselemente 2 eingebettet sind. Die Bewehrungselemente 2 sind vollständig in das Material des Regalbodens 1 eingebettet und treten an keiner Stelle des Regalbodens 1 durch das Material des Regalbodens 1 nach außen hindurch. Es handelt sich bei Fig. 3 somit um eine vereinfachte Darstellung, welche den Verlauf der Bewehrungselemente 2 innerhalb des Regalbodens 1 verdeutlichen soll. Durch die vollständige Einbettung der Bewehrungselemente 2 in den Regalboden 1 ergibt sich der Vorteil, dass die Bewehrungselemente 2, welche aus Betonstahl hergestellt sind vor Umwelteinflüssen und somit vor Korrosion geschützt werden.

Aus Fig. 3 wird weiterhin ersichtlich, dass einige Bewehrungselemente 2.1 in Bezug auf ihre Längserstreckung entlang der Längsrichtung X des Regalbodens ausgerichtet sind und parallel zueinander verlaufen. Andere Bewehrungselemente 2.2 sind wiederum in Bezug auf ihre Längserstreckung entlang der Querrichtung Y des Regalbodens ausgerichtet und verlaufen ebenfalls parallel zueinander. Hierbei sind sowohl die Bewehrungselemente 2.1 als auch die Bewehrungselemente 2.2 in äquidistanten Abständen zueinander angeordnet. Durch die parallele Anordnung mehrerer Bewehrungselemente 2 sowie deren Ausrichtung entlang der Längsrichtung X und/oder der Querrichtung Y des Regalbodens 1, ergibt sich der Vorteil einer Unterstützung des Regalbodens 1 entlang einer spezifischen Tragrichtung und eine entsprechende Erhöhung der Tragfähigkeit des Regalbodens 1.

Fig. 4 zeigt weiterhin eine Seitenansicht des Regalbodens 1 aus Fig. 3 wobei aus Gründen der Vereinfachung lediglich diejenigen Bewehrungselemente 2.2 dargestellt sind, welche in Bezug auf ihre Längserstreckung entlang der Querrichtung Y des Regalbodens 1 ausgerichtet sind. Da auch diese Bewehrungselemente 2.2 durch ihre vollständige Einbettung bei einer Betrachtung des Regalbodens von außen nicht sichtbar sind, handelt es sich auch bei Fig. 4 folglich um eine lediglich schematische Darstellung, die die Anordnung der Bewehrungselemente 2, 2.2 innerhalb des Regalbodens 1 verdeutlichen soll. Aus Fig. 4 wird anhand der gepunkteten Linie weiterhin ersichtlich, dass die Bewehrungselemente 2.2 in Bezug auf die Tiefenrichtung Z an einer identischen Position angeordnet sind. Natürlich ist es ebenfalls denkbar, dass zumindest eins der hier gezeigten Bewehrungselemente 2.2 in Bezug auf die Tiefenrichtung 2.2 einen Versatz zu wenigstens einem weiteren Bewehrungselement 2.2 aufweist. Gleiche Überlegungen gelten selbstverständlich für die in Bezug auf ihre Längserstreckung entlang der Längsrichtung X des Regalbodens 1 ausgerichteten Bewehrungselemente 2.1.

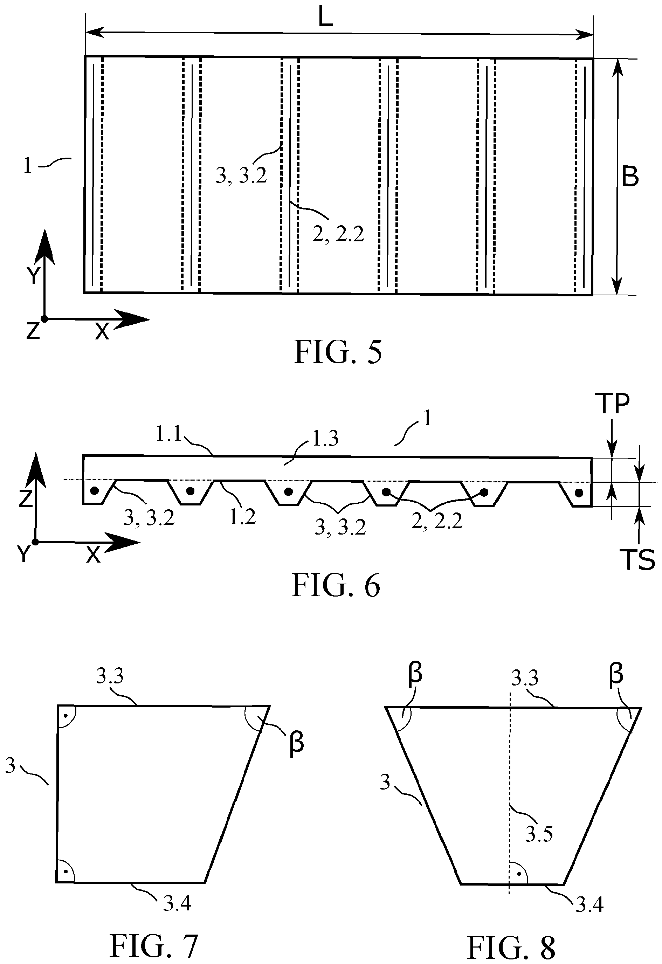

Fig. 5 zeigt eine Draufsicht auf einen erfindungsgemäßen Regalboden 1, welcher in Bezug auf die Draufsicht eine rechteckige Form aufweist. Die Oberfläche 1.1 des Regalbodens 1 gemäß der Fig. 5 ist als ebene Fläche ausgebildet und weist somit keine zusätzlichen Bauteile oder Materialanhäufungen auf. Entsprechend kann die Oberseite 1.1 des Regalbodens 1 zur Lagerung von Waren oder als Verkehrsweg für Fußgänger oder Fahrzeuge wie Gabelstapler, Hubwägen oder Flurfördergeräte genutzt werden. An der Unterseite des Regalbodens 1 sind zur Verstärkung des Regalbodens 1 mehrere Stegelemente 3 angeordnet, die mit dem Regalboden 1 ein monolithisches Bauteil ausbilden. Die Stegelemente 3 sind in der Fig. 5 durch die gestrichelten Linien dargestellt. Die Stegelemente 3 verlaufen parallel zueinander und sind in Bezug auf ihre Längserstreckung entlang der Querrichtung Y des Regalbodens 1 ausgerichtet und bilden somit Querstege 3.2. In die Querstege 3.2 sind zur Verstärkung des Regalbodens 1 Bewehrungselemente 2 eingebettet, welche vollständig durch das Material der Querstege umschlossen sind und an keiner Stelle durch das Material der Stegelemente 2 nach außen treten. Die Bewehrungselemente 2 sind aus Betonstahl hergestellt und verfügen an ihrer Außenseite über nicht dargestellte Rippen, wodurch ein optimaler Verbund zwischen den Bewehrungselementen 2 und dem sie umgebenden Material des Regalbodens 1 hergestellt wird. Durch die Einbettung von Bewehrungselementen 2 in die Stegelemente 3 oder auch in den quaderförmigen Plattenabschnitt 1.3 des Regalbodens 1 ergibt sich der Vorteil einer gesteigerten Zugfestigkeit des Regalbodens sowie einer insgesamt höheren Tragfähigkeit. Insgesamt wird durch die Anordnung der Stegelemente 3 an dem Regalboden 1 die Tragfähigkeit des Regalbodens 1 gesteigert.

Fig. 6 zeigt den Regalboden 1 gemäß der Fig. 5 in der Seitenansicht. Wie anhand der gepunkteten Linie der Fig. 6 verdeutlicht werden soll, lässt sich der Regalboden 1 gedanklich in zwei unterschiedliche geometrische Bereiche aufteilen. Der erste Bereich wird gebildet durch einen quaderförmigen Plattenabschnitt 1.3 und befindet sich in Bezug auf die Tiefenrichtung Z oberhalb der gepunkteten Linie. Der zweite Bereich wird durch die Stegelemente 3 gebildet und befindet sich mit Bezug auf die Tiefenrichtung Z unterhalb der gepunkteten Linie. Somit sind also die Stegelemente 3 an der Unterseite des quaderförmigen Plattenabschnitts 1.3 des Regalbodens 1 angeordnet. Im vorliegenden Ausführungsbeispiel sind die Stegelemente 3 materialeinheitlich mit dem quaderförmigen Plattenabschnitt 1.3 des Regalbodens ausgeführt. Somit bilden der quaderförmige Plattenabschnitt 1.3 des Regalbodens 1 und die Querstege 3.2 ein integrales, monolithisches Bauteil. Bei einer Belastung des Regalbodens 1 über die Oberseite 1.1 des Regalbodens 1 wird die Last über den quaderförmigen Plattenabschnitt 1.3 des Regalbodens in die Querstege 3.2 abgeleitet. Entsprechend dienen die Querstege 3.2 einer Unterstützung des Regalbodens 1 und erhöhen dessen Tragfähigkeit. Durch die Anordnung von Stegelementen 3 an der Unterseite des quaderförmigen Plattenabschnitts 1.3 des Regalbodens 1 kann daher die Materialstärke des quaderförmigen Plattenabschnitts TP gegenüber einer Gestaltung des Regalbodens 1 ohne Stegelemente 3 für eine vergleichbare Belastung reduziert werden, wodurch sich der Vorteil einer Gewichtsreduktion ergibt. Die Stegelemente 3, 3.2 verfügen in Bezug auf die Tiefenrichtung Z über die maximale Materialstärke TS. Die maximale Materialstärke T des Regalbodens in Bezug auf die Tiefenrichtung Z ergibt sich somit aus einer Addition der Materialstärke der Stegelemente TS und der Materialstärke des quaderförmigen Plattenabschnitts TP. Die geometrische Ausgestaltung der Oberfläche 1.1 des Regalbodens 1 bleibt durch die Querstege 3.2 unbeeinflusst. Wohl aber beeinflussen die Querstege 3.2 abschnittsweise den Verlauf der Oberflächenkontur des Regalbodens 1 auf der Unterseite 1.2 des Regalbodens 1. Auch wenn in den Figuren 5 und 6 aus Gründen der Übersichtlichkeit auf eine Darstellung verzichtet wurde, so ist es selbstverständlich denkbar, dass auch in den quaderförmigen Plattenabschnitt 1.3 wenigstens ein Bewehrungselement 2 eingebettet ist. Diesbezüglich wird auch ergänzend auf die Ausführungen zu Fig. 3 und Fig. 4 verwiesen.

Fig. 7 und Fig. 8 zeigen jeweils eine erfindungsgemäße Querschnittsformen der Stegelemente 3, wobei der Schnitt orthogonal zur Längserstreckung der Stegelemente 3 durchgeführt wurde und Fig. 7 und Fig. 8 eine Blickrichtung entlang der Längserstreckung der Stegelemente 3 repräsentiert. Fig. 7 zeigt den Querschnitt eines Stegelementes 3 in Form eines rechtwinkligen Trapezes, welches zwei rechte Innenwinkel von 90° (Winkelgrad) aufweist, die nebeneinander liegen. Fig. 8) zeigt den Querschnitt eines Stegelements 3 in Form eines symmetrischen Trapezes, welches eine zu einer Seite 3.4 senkrechte Symmetrieebene 3.5 aufweist. In beiden Fällen weist das Trapez zwei parallel zueinander ausgerichtete Kanten 3.3, 3.4 auf, von denen eine Kante 3.3 länger ist als die andere Kante 3.4. Gemäß der Fig. 6 sind die Stegelemente 3 derart am quaderförmigen Plattenabschnitt 4 des Regalbodens 1 angeordnet, dass die kürzere Kante 3.4 der beiden parallel ausgerichteten Kanten 3.3, 3.4 des Trapezförmigen Querschnitts des Stegelements 3 in Bezug auf den Regalboden nach außen orientiert ist und somit zumindest abschnittsweise eine Außenkante/Außenfläche bzw. Außenkontur des Regalbodens 1 bildet. Die längere Kante 3.3 der beiden parallel ausgerichteten Kanten 3.3, 3.4 ist hingegen zu dem quaderförmigen Plattenabschnitt 1.3 des Regalbodens 1 orientiert bzw. liegt an diesem an. Beide Querschnittsformen gemäß der Figuren 7 und 8 weisen zumindest einen Innenwinkel β auf, welcher kleiner ist als 90° (Winkelgrad) und größer ist als 45° (Winkelgrad).

Aus Fig. 6 wird weiterhin ersichtlich, dass insgesamt sechs Stegelemente 3, welche als Querstege 3.2 ausgebildet sind an der Unterseite des Regalbodens 1.2 bzw. des quaderförmigen Plattenabschnitt 1.3 des Regalbodens 1 angeordnet sind. Dabei sind zwei Stegelemente 3 mit der Querschnittsform eines rechtwinkligen Trapezes an jeweils einer Außenkante des Regalbodens 1 angeordnet und schließen nach außen bündig mit diesem bzw. mit dem quaderförmigen Plattenabschnitt 1.3 des Regalbodens 1 ab. Die übrigen Stegelemente 3 sind ebenfalls als Querstege 3.2 ausgeführt und sind jeweils mit einem Abstand zu mindestens einer Außenkante des Regalbodens 1 an der Unterseite 1.2 des Regalbodens 1 bzw. des quaderförmigen Plattenabschnitts 1.3 des Regalbodens 1 angeordnet. Entlang der Längsrichtung X weisen sowohl die Stegelemente 3 als auch die in die Stegelemente 3 eingebetteten Bewehrungselemente 2 äquidistante Abstände zueinander auf.

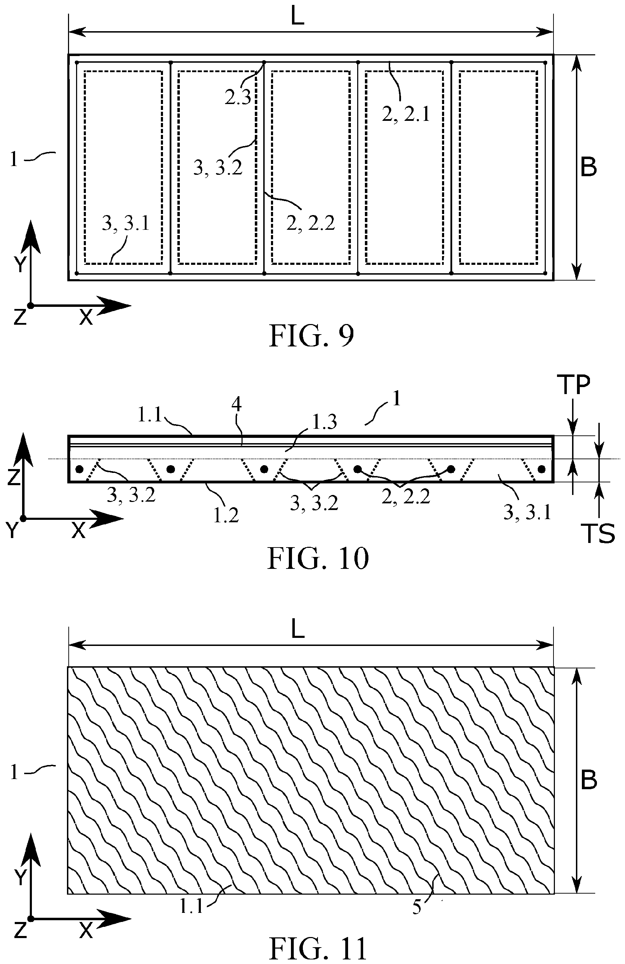

Fig. 9 zeigt ein weiteres Ausführungsbeispiel des erfindungsgemäßen Regalbodens 1. Der Regalboden 1 weist insgesamt acht Stegelemente 3 auf, welche an der Unterseite des Regalbodens 1.2 bzw. an der Unterseite des quaderförmigen Plattenabschnitts 1.3 des Regalbodens 1 angeordnet sind. Sechs Stegelemente 3 sind in Bezug auf ihre Längserstreckung entlang der Querrichtung Y des Regalbodens 1 ausgerichtet und bilden somit Querstege 3.2. Zwei weitere Stegelemente 3 sind in Bezug auf ihre Längserstreckung entlang der Längsrichtung X des Regalbodens 1 ausgerichtet und bilden somit Längsstege 3.1. Die einzelnen Stegelemente 3 sind hierbei an den Kreuzungspunkten miteinander verschnitten und bilden somit eine integrale Struktur. Auch bilden alle Stegelemente 3 mit dem quaderförmigen Plattenabschnitt 1.3 des Regalbodens 1 ein monolithisches und materialeinheitliches Bauteil. Der quaderförmige Plattenabschnitt 1.3 bildet somit gemeinsam mit den Stegelementen 3 den Regalboden 1 in integraler Bauweise. Die beiden Längsstege 3.1 sind jeweils an einer Außenkante des Regalbodens 1 angeordnet und schließen nach außen bündig mit dieser ab. Zwei der Querstege 3.2 sind ebenfalls an einer Außenkante des Regalbodens 1 angeordnet und schließen außen bündig mit dieser ab. Die an den Außenkanten des Regalbodens 1 angeordneten Stegelemente 3 bilden somit einen umlaufenden Rand unter dem quaderförmigen Plattenabschnitt 1.3 des Regalbodens 1. Sowohl in die Querstege 3.2 als auch in die Längsstege 3.1 des Regalbodens 1 sind Bewehrungselemente 2 eingebettet, welche aus Betonstahl hergestellt sind und vollständig durch das Material der Stegelemente 3 umschlossen sind und somit vor Korrosion geschützt werden. Außerdem verfügen die Bewehrungselemente 2 über nicht dargestellte Rippen, wodurch ein optimaler Verbund mit dem Material der Stegelemente 3 hergestellt wird. Die in den Stegelementen 3 eingebetteten Bewehrungselemente 2 sind an den jeweiligen Kreuzungspunkten zwischen zwei Bewehrungselementen 2.3 miteinander verschweißt und auf diese Weise stoffschlüssig miteinander verbunden. Auch eine kraftschlüssige Verbindung der Bewehrungselemente 2 durch Rödeldraht wäre in diesem Zusammenhang (auch zusätzlich) denkbar. Natürlich ist es ebenfalls denkbar, dass mehr als zwei Längsstege 3.1 an dem Regalboden 1 angeordnet sind. In diesem Zusammenhang sind die Längsstege 3.1 in Bezug auf die Querrichtung Y bevorzugt in äquidistanten Abständen zueinander angeordnet.

Fig. 10 zeigt den Regalboden 1 der Fig. 9 in der Seitenansicht. Da die Sicht auf die Querstege 3.2 in dieser Perspektive durch einen Längssteg 3.1 verhindert wird, sind die Querstege 3.2 durch die gepunkteten Linien angedeutet. Ebenfalls in Fig. 10 dargestellt ist, dass an dem Regalboden 1 eine Nut und/oder Feder 4 ausgebildet ist. Hierbei ist es denkbar, dass die Nut oder Feder 4 umlaufend ausgebildet ist also in anderen Worten auf dem ganzen Umfang des Regalbodens 1 ausgebildet ist. Natürlich wäre ebenfalls denkbar, dass eine Nut oder Feder 4 lediglich abschnittsweise an dem Regalboden 1 ausgebildet ist. Auch kann bspw. an einer Außenseite des Regalbodens 1 eine Feder 4 und an einer anderen Außenkante eine Nut 4 ausgebildet sein. Über die Nut oder Feder 4 können sowohl mehrere Regalböden 1 formschlüssig und/oder kraftschlüssig miteinander verbunden werden als auch eine Verbindung zwischen einem erfindungsgemäßen Regalboden 1 und einem Regallagersystem 100 hergestellt werden. Hierzu verfügt das Regallagersystem 100 bzw. der Regalaufbau 110 des Regalsystems 100 dann über einen entsprechenden Gegenpart zum Regalboden 1. Ist also an dem Regalboden 1 bspw. eine Feder 4 zur Befestigung an dem Regallagersystem 100 ausgebildet, so verfügt das Regallagersystem 100 über eine entsprechende Nut 4 und umgekehrt.

Für alle voranstehend beschriebenen Ausführungsbeispiele ist eine Herstellung des Regalbodens 1 aus faserverstärktem Beton denkbar. In anderen Worten handelt es sich hierbei um einen Betonwerkstoff, welcher mit einer zusätzlichen Faserbewehrung versehen ist. Hierbei kann es sich um Stahlfasern und/oder Kunststofffasern und/oder Carbonfasern und/oder AR-Glas Fasern handeln. Es hat sich hierbei als vorteilhaft erwiesen, wenn der Faseranteil im Beton einen volumetrischen Anteil von 2,5 Vol.-% nicht überschreitet. Insbesondere hat es sich als vorteilhaft erwiesen, wenn der Faseranteil im Beton 1 Vol.-% (± 0,2 Vol.-%) beträgt. Im Hinblick auf die Abmessungen der zur Faserbewehrung verwendeten Fasern ist es insbesondere denkbar, das Fasern mit einer Länge von 13 mm (± 2 mm) und einem Durchmesser von 0,18 mm (± 0,2 mm) verwendet werden.

Fig. 11 zeigt einen erfindungsgemäßen Regalboden 1 in der Draufsicht, wobei die Oberseite 1.1 eines erfindungsgemäßen Regalbodens 1 mit einer Struktur und/oder Beschichtung 5 versehen sein kann. Diese Struktur und/oder Beschichtung 5 kann hierbei zur Markierung einer Flächenfunktion und/oder zur Realisierung einer rutschfesten Oberfläche dienen. Auch kann eine erfindungsgemäße Beschichtung und/ oder Struktur 5 den Regalboden vor äußeren Einflüssen oder aggressiven Materialien schützen.

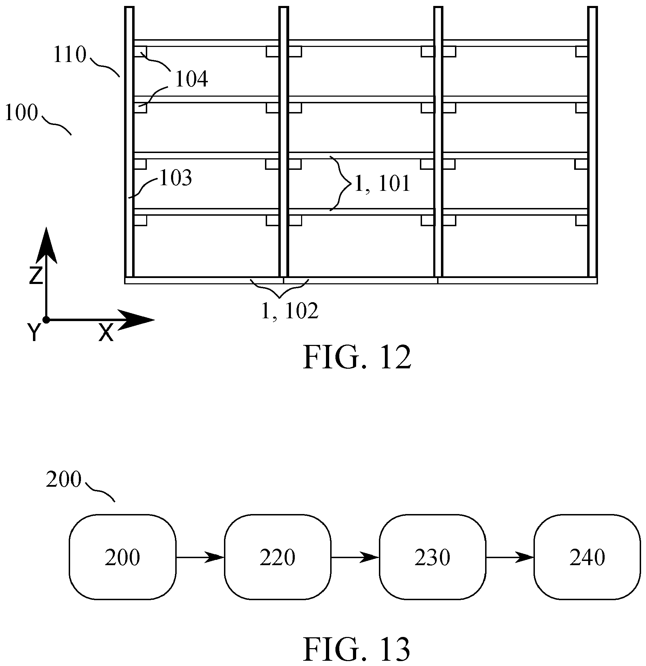

Fig. 12 zeigt ein erfindungsgemäßes Regallagersystem 100 umfassend einen Regalaufbau 110. Der Regalaufbau 110 ist lediglich auf vereinfachte Art und Weise durch vertikale ausgerichtete Stützelemente 103 sowie Unterkonstruktionselemente 104 dargestellt, wobei die Unterkonstruktionselemente 104 als Auflage für diejenigen Regalböden 1 dienen, welche als Lagerflächen 101 genutzt werden. Es ist hierbei denkbar, dass ein Regallagersystem 100 aus mehreren Regalaufbauten 110 besteht. Im unteren Bereich des Regalaufbaus 110 befinden sich (den vertikalen Stützelementen vorgelagert) weitere Regalböden 1, welche als Laufflächen 102 genutzt werden. Auf diesen Regalböden 1, 102 können sich folglich Fußgänger und/oder Fahrzeuge wie Hubwägen bewegen um Zugang zu den durch die Lagerflächen 101 gebildeten Lagerplätzen zu erlangen. Die Lagerflächen 101 und die Laufflächen 102 sind hierbei als erfindungsgemäße Regalböden 1 aus Beton ausgebildet.

Fig. 13 zeigt ein erfindungsgemäßes Verfahren 200 zur Herstellung eines erfindungsgemäßen Regalbodens 1, umfassend die folgenden Schritte:
a) Vorbereiten einer Form oder Schalung zur Aufnahme von flüssigem Beton, welche die äußere Kontur des herzustellenden Regalbodens 1 als Negativ abbildet (210)
b) Anmischen des Betons zur weiteren Verarbeitung (220)
c) Einfüllen des Betons in die Form (230)
d) Trennen der Form oder Schalung von dem Regalboden 1 sobald der Beton in ausreichender Weise ausgehärtet ist. (240)

Hierbei können insbesondere die Verfahrensschritte a) und b) auch gleichzeitig bzw. parallel ausgeführt werden, wodurch der Vorteil einer besonders zeiteffizienten Herstellung eines Regalbodens 1 erzielt werden kann.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Regalboden
- 1.1: Oberseite des Regalbodens
- 1.2: Unterseite des Regalbodens
- 1.3: Quaderförmiger Plattenabschnitt des Regalbodens
- 2: Bewehrungselement
- 2.1: Bewehrungselement ausgerichtet entlang der Längsrichtung X
- 2.2: Bewehrungselement ausgerichtet entlang der Querrichtung Y
- 2.3: Kreuzungspunkt zwischen zwei Bewehrungselementen
- 3: Stegelement
- 3.1: Stegelement ausgerichtet entlang der Längsrichtung X (Längssteg)
- 3.2: Stegelement ausgerichtet entlang der Querrichtung Y (Quersteg)
- 3.3: Lange Kante eines Trapezes
- 3.4: Kurze Kante eines Trapezes
- 3.5: Symmetrieebene eines symmetrischen Trapezes
- 4: Nut / Feder
- 5: Struktur oder Beschichtung

- 100: Regallagersystem
- 110: Regalaufbau
- 101: Lagerfläche
- 102: Lauffläche
- 103: Stützelement
- 104: Unterkonstruktionselement

- 200: Verfahren zur Herstellung eines erfindungsgemäßen Regalbodens
- 210: Verfahrensschritt a)
- 220: Verfahrensschritt b)
- 230: Verfahrensschritt c)
- 240: Verfahrensschritt d)
- B: Breite
- L: Länge
- T: (maximale) Tiefe / Materialstärke
- TP: Tiefe / Materialstärke des quaderförmigen Plattenabschnitts des Regalbodens
- TS: Tiefe / Materialstärke eines Stegelements
- X: Längsrichtung
- Y: Querrichtung
- Z: Tiefenrichtung

- β: Winkel

## Patentansprüche

1. Regalboden (1) zur Verwendung mit einem Regallagersystem (100), insbesondere als Lagerfläche (101) oder Lauffläche (102),
**dadurch gekennzeichnet,**
**dass** der Regalboden (1) aus Beton hergestellt ist.

2. Regalboden (1) nach Anspruch 1,
**dadurch gekennzeichnet,**
**dass** die Oberseite (1.1) des Regalbodens (1) und/oder die Unterseite (1.2) des Regalbodens (1) als ebene Fläche ausgestaltet ist.

3. Regalboden (1) nach einem der vorhergehenden Ansprüche
**dadurch gekennzeichnet,**
**dass** in den Regalboden (1) wenigstens ein insbesondere stabförmiges Bewehrungselement (2) eingebettet ist, welche vorzugsweise aus Betonstahl hergestellt ist.

4. Regalboden (1) nach einem der vorhergehenden Ansprüche,
**dadurch gekennzeichnet,**
**dass** an der Unterseite (1.2) des Regalbodens (1) zur Verstärkung wenigstens zwei Stegelemente (3) angeordnet oder ausgeformt sind, welche vorzugsweise mit dem Regalboden (1) ein monolithisches Bauteil ausbilden,
wobei insbesondere wenigstens ein Stegelement (3) derart ausgebildet ist, dass es über einen trapezförmigen Querschnitt verfügt.

5. Regalboden (1) nach einem der vorhergehenden Ansprüche,
**dadurch gekennzeichnet,**
**dass** in wenigstens ein Stegelement (3) zur Erhöhung der Tragfähigkeit wenigstens ein insbesondere stabförmiges Bewehrungselement (2) eingebettet ist, welches vorzugsweise aus Betonstahl hergestellt ist,
und/oder dass wenigstens ein Stegelement (3) des Regalbodens (1) als Längssteg (3.1) ausgebildet ist,
und/oder dass wenigstens ein Stegelement (3) des Regalbodens (1) als Quersteg (3.2) ausgebildet ist,
wobei insbesondere wenigstens ein in einen Quersteg (3.2) eingebettetes Bewehrungselement (2.2) mit wenigstens einem in einen Längssteg (3.1) eingebetteten Bewehrungselement (2.1) kraftschlüssig und/oder formschlüssig und/oder stoffschlüssig verbunden ist.

6. Regalboden (1) nach einem der vorhergehenden Ansprüche,
**dadurch gekennzeichnet,**
**dass** der Regalboden (1) zur Erhöhung der Biegezugfestigkeit sowie zur Erreichung eines duktileren Materialverhaltens aus einem faserverstärkten Beton hergestellt ist, und/oder dass zur Faserbewehrung Stahlfasern und/oder Kunstofffasern und/oder Carbonfasern als Fasermaterial in dem faserverstärkten Beton beinhaltet sind.

7. Regalboden (1) nach einem der vorhergehenden Ansprüche,
**dadurch gekennzeichnet,**
**dass** die zur Faserbewegung verwendeten Fasern eine Länge zwischen 5mm und 20mm aufweisen und/oder einen Durchmesser zwischen 0,1 mm und 0,25 mm aufweisen, und/oder dass der faserverstärkte Beton einen Faseranteil zwischen 0,5 Vol.-% und 2,5 Vol.% aufweist.

8. Regalboden (1) nach einem der vorhergehenden Ansprüche,
**dadurch gekennzeichnet,**
**dass** der Regalboden eine Länge (L) von 1300 mm und/oder eine Breite (B) von 680 mm und/oder eine maximale Materialstärke (S) von 38 mm aufweist.

9. Regalboden (1) nach einem der vorhergehenden Ansprüche,
**dadurch gekennzeichnet,**
**dass** die Oberseite (1.1) des Regalbodens (1) mit einer Struktur und/oder Beschichtung (5) versehen ist.

10. Regallagersystem (100) umfassend wenigstens einen Regalaufbau (110) mit wenigstens einer Lagerfläche (101) und/oder wenigstens einer Lauffläche (102),
**dadurch gekennzeichnet,**
**dass** wenigstens eine Lagerfläche (101) und/oder wenigstens eine Lauffläche (102) des Regallagersystems (100) zumindest abschnittsweise durch einen Regalboden (1) nach einem der Ansprüche 1 bis 9 ausgebildet ist.

11. Regallagersystem (100) nach Anspruch 10,
**dadurch gekennzeichnet,**
**dass** wenigstens ein Regalboden (1) des Regallagersystems (100) zur eindeutigen Kennzeichnung einer zugehörigen Flächenfunktion eingefärbt und/oder markiert ist.

12. Verfahren (200) zur Herstellung eines Regalbodens nach einem der Ansprüche 1 bis 9, wobei die folgenden Schritte durchgeführt werden:
a) Vorbereiten einer Form oder Schalung zur Aufnahme von flüssigem Beton, welche die äußere Kontur des herzustellenden Regalbodens (1) als Negativ abbildet (210)
b) Anmischen des Betons zur weiteren Verarbeitung (220)
c) Einfüllen des Betons in die Form (230)
d) Trennen der Form oder Schalung von dem Regalboden (1) sobald der Beton in ausreichender Weise ausgehärtet ist (240).

13. Verfahren (200) nach Anspruch 12,
**dadurch gekennzeichnet,**
**dass** Schritt a) zusätzlich wenigstens einer der folgenden Verfahrensschritte umfasst:
• Zumindest teilweise Beschichtung des Inneren der Form oder Schalung mit einem Trennmittel
• Einsetzen wenigstens eines Bewehrungselementes bzw. einer Bewehrungskonstruktion aus mehreren Bewehrungselementen in die Form oder Schalung
• Herstellen einer formschlüssigen und/oder kraftschlüssigen und/oder stoffschlüssigen Verbindung zwischen wenigstens zwei Bewehrungselementen
• Aufbringen eines insbesondere hydrophoben Trennmittels auf die Innenseite der Form oder Schalung.
• Vorbereiten eines Deckels für die Form oder Schalung wobei insbesondere eine Strukturmatrize auf einer Seite des Deckels angeordnet wird.

14. Verfahren (200) nach Anspruch 12 oder 13,
**dadurch gekennzeichnet,**
**dass** Schritt b) zusätzlich den folgenden Verfahrensschritt umfasst:
• Hinzugabe von Additiven zu der Betonmischung, insbesondere Bewehrungsfasern und/oder Farbpigmente.

15. Verfahren nach einem der Ansprüche 12 bis 14,
**dadurch gekennzeichnet,**
**dass** Schritt c) zusätzlich den folgenden Verfahrensschritt umfasst:
• Verschließen der Form oder Schalung mit einem Deckel, wobei der Deckel vorzugsweise mit wenigstens einer Seite zur Oberfläche des Regalbodens orientiert ist und bevorzugt mit der Oberfläche des Regalbodens in Kontakt kommt, wobei insbesondere auf der Seite des Deckels die mit der Oberseite des Regalbodens in Kontakt kommt eine Strukturmatrize angeordnet ist.
